(19) Europäisches Patentamt
European Patent Office
Office européen des brevets

(11) **EP 3 734 117 B1**

(12) # EUROPEAN PATENT SPECIFICATION

(45) Date of publication and mention
of the grant of the patent:
**20.09.2023 Bulletin 2023/38**

(21) Application number: **20167226.8**

(22) Date of filing: **31.03.2020**

(51) International Patent Classification (IPC):
**F16H 57/01** *(2012.01)* **G01M 13/00** *(2019.01)*

(52) Cooperative Patent Classification (CPC):
**F16H 57/01;** F16H 2057/012

(54) **METHOD OF DETECTING THE STATE OF WEAR OF AN ELECTRIC ACTUATOR**

VERFAHREN ZUM ERFASSEN DES VERSCHLEISSZUSTANDS EINES ELEKTRISCHEN AKTUATORS

MÉTHODE POUR DÉTECTER L'ÉTAT D'USURE D'UN ACTIONNEUR ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.04.2019 IT 201900005614**

(43) Date of publication of application:
**04.11.2020 Bulletin 2020/45**

(73) Proprietor: **Camozzi Automation S.p.A.
25126 Brescia (IT)**

(72) Inventors:
• **GHIDINI, Marco
I-25126 BRESCIA (IT)**

• **CAPPA, Simone
I-25126 BRESCIA (IT)**

(74) Representative: **Chimini, Francesco
Jacobacci & Partners S.p.A.
Piazza della Vittoria 11
25122 Brescia (IT)**

(56) References cited:
WO-A1-2010/134884    WO-A2-2008/007058
FR-A1- 3 050 523    KR-B1- 100 957 952
US-A1- 2019 063 568

**Description**

The present invention refers to a method, a control unit and a computer program for detecting the status of wear of an electric actuator, and an electric actuator comprising means suitable for detecting its own status of wear.

The electric actuator, whose status of wear is to be detected, comprises an electric motor having a drive shaft, a load suitable for being driven in translation by the electric motor along a translation axis, and a transmission system interposed between the electric motor and the load and suitable for converting the rotation of the drive shaft into a translation of the load.

For example, the electric actuator is an electric cylinder. WO 2010/134884 A1 discloses a method for detecting the status of wear of an electric actuator, wherein said electric actuator comprises an electric motor having a drive shaft, a load being driven in translation by the electric motor along a translation axis, and a transmission system interposed between the electric motor and the load for converting the rotation of the drive shaft into a translation of the load, the method comprising the steps of: applying, by means of the electric motor, a first torque to the drive shaft in a first direction of rotation; detecting a first angular position of the drive shaft; applying, by means of the electric motor, a second torque to the drive shaft in a second direction of rotation opposite to the first; detecting a second angular position of the drive shaft; measuring the difference between the first angular position and the second angular position.

The present invention aims to provide a method for automatically detecting the status of wear of an electric actuator, in particular for conducting predictive diagnostic analyses on the operation of the electric actuator.

This purpose is achieved with a method for detecting the status of wear of an electric actuator according to claim 1, with a control unit for an electric actuator according to claim 6, with a computer program according to claim 9, and with an electric actuator according to claim 12.

The dependent claims describe preferred embodiments of the invention.

The features and advantages of the invention will become clear from the description given below of preferred embodiments, given solely as non-limiting examples in reference to the enclosed figures, wherein:

-  figure 1 is a schematic representation of an electric actuator according to the invention;
-  figure 2 shows an example of an embodiment of the electric actuator according to the invention;
-  figure 3 is a graphic showing the application of test torques to the electric actuator and measurement of the play in the actuator in millimeters.

In these drawings, the number 1 refers to an electric actuator as a whole, according to the invention.

In a general embodiment, it is known that electric actuator 1 comprises an electric motor 10 having a drive shaft 12, a load 14 suitable for being driven in translation by electric motor 10 along a translation axis X, and a transmission system 16 interposed between electric motor 10 and load 14 and suitable for converting the rotation of drive shaft 12 into a translation of load 14.

The Applicant has discovered that the detection and measurement of play introduced by transmission system 16 can be used for diagnostic purposes to conduct predictive analyses on the proper operation of actuator 1, that is, to predict when the actuator must be replaced or possibly repaired before the actuator breaks or before an unacceptable deterioration of performance.

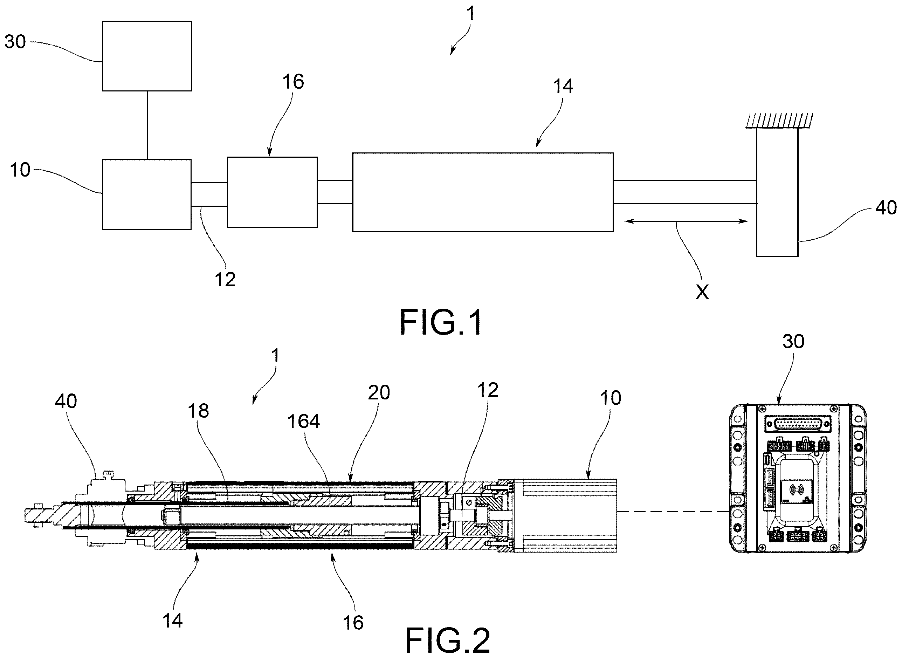

In one embodiment shown in figure 2, electric actuator 1 is an electric cylinder. The electric cylinder comprises electric motor 10, preferably a torque-controllable motor, suitable for controlling the rotation of a drive shaft 12.

In one embodiment, a reduction gear is placed between motor 10 and drive shaft 12.

In this case, load 14 driven in translation is represented by a rod 18 sliding in sleeve 20 of the electric cylinder.

In one embodiment, transmission system 16 that converts the rotation of the drive shaft into a translation of the rod comprises a ball screw system 162.

Screw 162 can be housed inside rod 18, which in this case is hollow.

The balls are contained in lead nut 164 integral to rod 18, and therefore also slides inside the section formed by sleeve 20 of the cylinder.

In one embodiment, electric actuator 1 is provided with a device for detecting the angular position of the drive shaft, for example an encoder. This device can be incorporated directly into the electric motor.

Electric actuator 1 comprises a control unit 30 suitable for controlling electric motor 10. Control unit 30 is provided with a computer program implementing the method for detecting the status of wear of the electric actuator which will be described below.

Electric actuator 1 further comprises an axial locking device 40 that is activatable to lock load 14 at least axially in the direction of the axis of translation X.

In a preferred embodiment for detecting the total backlash of the electric actuator, axial locking device 40 is configured to allow load 14 to be free to rotate about the axis of translation X.

For example, axial locking device 40 comprises a joint provided with skids that allow rod 18 only to undergo rotation and not translation.

In some embodiments or in some applications where the load does not have the possibility of rotating, it is possible to apply the method for detecting the status of wear described above to detect--if not the axial play due to the wear of the skids--the axial play of the rest of the transmission system, particularly the play introduced by the ball screw and bearings.

It must be noted that axial locking device 40 does not necessarily need to be built into or integral to electric actuator 1. In particular, axial locking device 40 could be supplied as an accessory if the wear detection method is to be applied to an electric actuator already being used in the field.

Similarly, the computer program implementing the wear detection method does not necessarily need to be preloaded into the memory of control unit 30, but can be installed on the control unit of a conventional electric actuator.

According to a feature of the invention, the method for detecting the wear of an electric actuator comprises the following steps.

Load 14 is locked axially in the direction of the axis of translation X.

In a preferred embodiment, the load is left free to rotate about the axis of translation X.

By means of electric motor 10, a first test torque C1 is applied to drive shaft 12 in a first direction of rotation, such as the clockwise direction.

First test torque C1 must be at least enough to overcome the internal friction of electric actuator 1.

First test torque C1 is then removed. In one embodiment, first test torque C1 is decreased linearly, or according to some other suitable law, to avoid any elastic inertia of the system. In some cases it may be appropriate to leave a residual torque to avoid elastic returns of the system.

A first angular position of drive shaft 12 is detected, i.e. the position of drive shaft 12 upon removal of first test torque C1 or once the predetermined residual torque is reached.

At this point a second test torque C2 is applied to drive shaft 12 by means of electric motor 10 in a second direction of rotation opposite to the first, such as the counterclockwise direction. In one embodiment, second test torque C2 is equal to first test torque C2 in absolute value. In other embodiments, however, second test torque C2 could also be different from first test torque C1, for example based on the load conditions of the actuator. For example, a different torque could be necessary if the cylinder is installed in a vertical position, in which case the torque required to make the rod come out must also overcome the weight of the lead nut and lead nut holder, whereas the torque in the opposite direction needs to be less since gravity is assisting.

Second test torque C2 is then removed or reduced to the predetermined residual value.

A second angular position of drive shaft 12 is then detected.

Here again, second test torque C2 can be reduced linearly or according to a different and more favorable law.

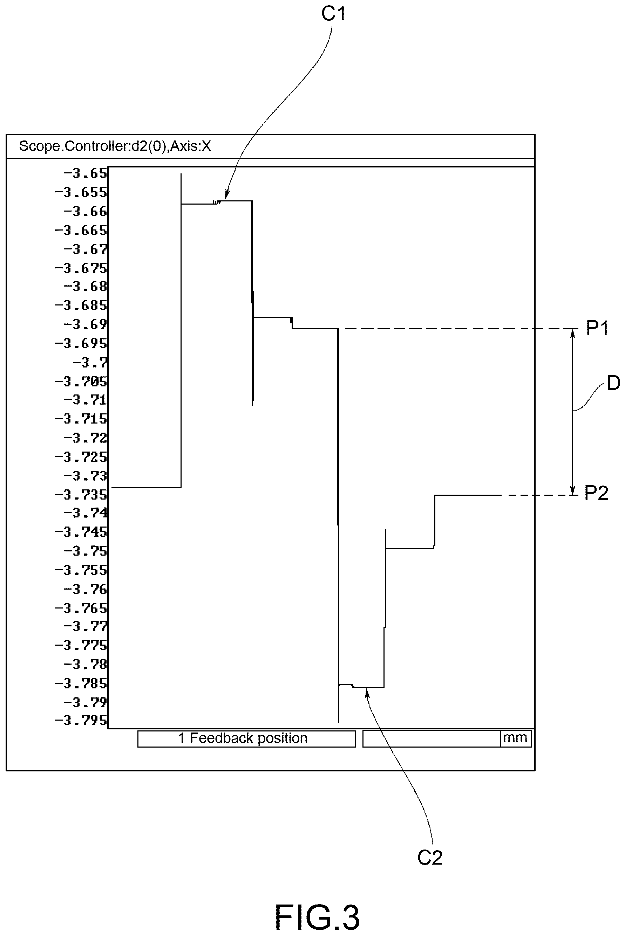

At this point, the difference D between the first angular position and the second angular position, or between a first position value P1 obtained from the first angular position and a second position value P2 obtained from the second angular position, is measured (Figure 3).

For example, the first and second angular positions can be converted into a linear quantity, such as millimeters, before calculating the difference.

Alternatively, the conversion to length can be done after finding the difference between the two angular positions.

For example, in the case of an electric cylinder, the conversion from encoder steps to millimeters is calculated by the gear ratio and screw pitch of the cylinder.

The value given by the difference between the two positions is the play or backlash of the electric actuator.

A numerical example of the backlash detection method according to the invention applied to an electric cylinder is described in figure 3.

After locking the rod axially, but not angularly, a torque C1 of 0.45 Nm is applied to the actuator in the clockwise direction.

The torque is dropped in a non-instantaneous way, with a step at 0.045 Nm.

Lastly, the torque is set to 0 Nm.

The angular position of the shaft is detected and converted into millimeters (Position P1).

A torque of -0.45 Nm is then applied to the actuator in counterclockwise direction C2.

The torque is dropped in a non-instantaneous way, with a step at -0.045 Nm.

Lastly, the torque is set to 0 Nm.

The angular position of the shaft is detected and converted into millimeters (Position P2).

The difference D between first position P1 and second position P2 is calculated to determine the backlash:

$$\text{backlash} = \left| \text{Position P1} - \text{Position P2} \right|$$

The test can be repeated with various torque values to simulate the behavior of the actuator.

According to a feature of the invention, a control unit 30 for controlling a programmable electric actuator is provided to implement the wear detection method described above.

Control unit 30 is then configured to:

- control the electric motor to apply a first test torque C1 to the drive shaft in a first direction of rotation;
- control the electric motor to remove the first test torque C1 or reduce the first test torque C1 to a predetermined residual value;
- receive, from a position sensor, a first datum representative of a first angular position of the drive shaft;
- control the electric motor to apply a second test torque C2 to the drive shaft in a second direction of rotation;
- control the electric motor to remove second test torque C2 or reduce the second test torque to said predetermined residual value;
- receive, from said position sensor, a second datum representative of a second angular position of the drive shaft;
- measure the difference between said first datum and said second datum or between a first position value P1 obtained from the first datum and a second position value P2 obtained from the second datum.

In one embodiment, second test torque C2 is equal to first test torque C1 in absolute value.

In one embodiment, the first and second test torques are decreased linearly or according to a different and more favorable law that minimizes the elastic returns of the transmission system.

The subject matter of the invention also refers to a computer program running on a control unit of an electric actuator and comprising portions of code suitable for carrying out the functions described above on the control unit.

In one embodiment, the computer program is suitable for:

- controlling the electric motor to apply a first test torque to the drive shaft in a first direction of rotation;
- controlling the electric motor to remove the first test torque or reduce the first test torque to a predetermined residual value;
- storing a first datum representative of a first angular position of the drive shaft assumed when removing the first test torque or upon reaching the residual torque value;
- controlling the electric motor to apply a second test torque to the drive shaft in a second direction of rotation;
- controlling the electric motor to remove the second test torque or reduce the second test torque to said predetermined residual value;
- storing a second datum representative of a second angular position of the drive shaft assumed when the second test torque is removed or upon reaching the residual torque value;
- measuring the difference between said first datum and said second datum or between a first position value obtained from the first datum and a second position value obtained from the second datum.

In one embodiment, the second test torque is equal to the first test torque in absolute value.

According to a feature of the invention, an electric actuator comprising an electric toque-controllable motor with a drive shaft, a load suitable for being driven in translation by the electric motor along a translation axis, a transmission system interposed between the electric motor and the load and suitable for converting the rotation of the drive shaft into a translation of the load, an angular position sensor suitable for detecting the angular position of the drive shaft, and a control unit for controlling the programmable electric motor as described above and operatively connected to the position sensor, is provided.

It must be stressed that the method for detecting and calculating the play of the electric actuator is completely automated. The test process for calculating the play is very fast to carry out and can be applied advantageously to the electric motor when the electric actuator is paused, such as between two movements of the load.

## Claims

1. Method of detecting or measuring play in an electric actuator (1), wherein said electric actuator (1) comprises an electric motor (10) having a drive shaft (12), a load (14) being driven in translation by the electric motor (10) along a translation axis (X), and a transmission system (16) interposed between the electric motor (10) and the load (14) for converting the rotation of the drive shaft (12) into a translation of the load (14), comprising the steps of:

   a) controlling the electric motor (10) to apply a first test torque (C1) to the drive shaft (12) in a first direction of rotation;
   b) controlling the electric motor (10) to remove the first test torque (C1) or reduce the first test torque (C1) to a predetermined residual value;

c) storing a first datum representative of a first angular position of the drive shaft (12) assumed when removing the first test torque (C1) or upon reaching the residual torque value;

d) controlling the electric motor (10) to apply a second test torque (C2) to the drive shaft (12) in a second direction of rotation;

e) controlling the electric motor (10) to remove the second test torque (C2) or reduce the second test torque (C2) to said predetermined residual value;

f) storing a second datum representative of a second angular position of the drive shaft (12) assumed when the second test torque (C2) is removed or upon reaching the residual torque value;

g) measuring the difference (D) between said first datum and said second datum or between a first linear position value (P1) of the drive shaft (12) obtained from the first datum and a second linear position value (P2) of the drive shaft (12) obtained from the second datum.

2. Method according to claim 1, comprising, before step a), axially locking the load (14) in the direction of the translation axis (X).

3. Method according to claim 2, wherein the axially locked load (14) is left free to rotate about the translation axis (X).

4. Method according to anyone of the claims 2-3, wherein the second test torque (C2) is equal in absolute value to the first test torque (C1).

5. Method according to claim 2, wherein, in steps b) and e) the test torque (C1, C2) is made to decrease in a linear manner or other law suitable for minimizing the elastic returns of the transmission system (16).

6. Control unit (30) for an electric actuator (1), wherein said electric actuator (1) comprises an electric motor (10) having a drive shaft (12), a load (14) being driven in translation by the electric motor (10) along a translation axis (X), and a transmission system (16) interposed between the electric motor (10) and the load (14) for converting the rotation of the drive shaft (12) into a translation of the load (14), the control unit (30) being programmed for:

   - controlling the electric motor (10) to apply a first test torque (C1) to the drive shaft (12) in a first direction of rotation;
   - controlling the electric motor (10) to remove the first test torque (C1) or reduce the first test torque (C1) to a predetermined residual value;
   - receiving, from a position sensor, a first datum representative of a first angular position of the drive shaft (12);
   - controlling the electric motor (10) to apply a second test torque (C2) to the drive shaft (12) in a second direction of rotation;
   - controlling the electric motor (10) to remove the second test torque (C2) or reduce the second test torque (C2) to said predetermined residual value;
   - receiving, from said position sensor, a second datum representative of a second angular position of the drive shaft (12);
   - measuring the difference (D) between said first datum and said second datum or between a first linear position value (P1) of the drive shaft (12) obtained from the first datum and a second linear position value (P2) of the drive shaft (12) obtained from the second datum.

7. Control unit (30) according to the preceding claim, wherein said second test torque (C2) is equal in absolute value to the first test torque (C1).

8. Control unit (30) according to claim 6 or 7, wherein the first and the second test torque (C1, C2) are made to decrease linearly or according to another law suitable for minimizing the elastic returns of the transmission system (16).

9. Computer program executable on a control unit (30) of an electric actuator (1) and comprising code portions which, when the program is executed by a computer, cause the computer to carry out the steps of the method according to claim 1.

10. Computer program according to claim 9, wherein said second test torque (C2) is equal in absolute value to the first test torque (C1).

11. Computer program according to claim 9 or 10, wherein the first and the second test torque (C1, C2) are made to decrease linearly or according to another law suitable for minimizing the elastic returns of the transmission system (16).

12. Electric actuator (1), comprising an electric torque-controllable motor (10) having a drive shaft (12), a load (14) being driven in translation by the electric motor (10) along a translation axis (X), a transmission system (16) interposed between the electric motor (10) and the load (14) for converting the rotation of the drive shaft (12) into a load translation, an angular position sensor suitable for detecting the angular position of the drive shaft (12), and a control unit (30) for the electric motor (10) according to any one of claims 6-8 and operatively connected to the position sensor.

13. Electric actuator (1) according to the preceding claim, comprising a cylinder, wherein the load (14) is a rod (18) slidable in the cylinder, and wherein the transmission system (16) comprises a ball screw (164).

14. Electric actuator (1) according to claim 12 or 13, further comprising an axial locking device (40) which is activatable for axially locking the load (14) in the direction of the translation axis (X).

15. Electric actuator (1) according to claim 14, wherein the axial locking device (40) leaves the load (14) free to rotate about the translation axis (X).


**Patentansprüche**

1. Verfahren eines Detektierens oder Messens von Spiel in einem elektrischen Aktuator (1), wobei der elektrische Aktuator (1) einen Elektromotor (10) mit einer Antriebswelle (12), eine in Translation durch den Elektromotor (10) entlang einer Translationsachse (X) angetriebene Last (14) und ein Übertragungssystem (16) umfasst, welches zwischen dem Elektromotor (10) und der Last (14) eingefügt ist, um die Rotation der Antriebswelle (12) in eine Translation der Last (14) umzuwandeln, umfassend die Schritte:

   a) Steuern des Elektromotors (10) dazu, ein erstes Testdrehmoment (C1) auf die Antriebswelle (12) in einer ersten Rotationsrichtung auszuüben;
   b) Steuern des Elektromotors (10) dazu, das erste Testdrehmoment (C1) zu entfernen oder das erste Testdrehmoment (C1) auf einen vorbestimmten Restwert zu reduzieren;
   c) Speichern eines ersten Datenwerts, welcher eine erste Winkelposition der Antriebswelle (12) repräsentiert, welche eingenommen wird, wenn das erste Testdrehmoment (C1) entfernt wird oder auf ein Erreichen des Rest-Drehmomentwerts hin;
   d) Steuern des Elektromotors (10) dazu, ein zweites Testdrehmoment (C2) auf die Antriebswelle (12) in einer zweiten Rotationsrichtung auszuüben;
   e) Steuern des Elektromotors (10) dazu, das zweite Testdrehmoment (C2) zu entfernen oder das zweite Testdrehmoment (C2) auf den vorbestimmten Restwert zu reduzieren;
   f) Speichern eines zweiten Datenwerts, welcher eine zweite Winkelposition der Antriebswelle (12) repräsentiert, welche eingenommen wird, wenn das zweite Testdrehmoment (C2) entfernt wird oder auf ein Erreichen des Rest-Drehmomentwerts hin;
   g) Messen der Differenz (D) zwischen dem ersten Datenwert und dem zweiten Datenwert oder zwischen einem ersten linearen Positionswert (P1) der Antriebswelle (12), welcher aus dem ersten Datenwert erhalten wird, und einem zweiten linearen Positionswert (P2) der Antriebswelle (12), welcher aus dem zweiten Datenwert erhalten wird.

2. Verfahren nach Anspruch 1, umfassend vor Schritt a) ein axiales Verriegeln der Last (14) in der Richtung der Translationsachse (X).

3. Verfahren nach Anspruch 2, wobei die axial verriegelte Last (14) frei belassen wird, um die Translationsachse (X) zu rotieren.

4. Verfahren nach einem der Ansprüche 2-3, wobei das zweite Testdrehmoment (C2) gleich in seinem Absolutwert zu dem ersten Testdrehmoment (C1) ist.

5. Verfahren nach Anspruch 2, wobei in den Schritten b) und e) das Testdrehmoment (C1, C2) dazu veranlasst wird, in einer linearen Weise oder nach einer anderen Vorgabe abzunehmen, welche geeignet ist, das elastische Rückstellen des Übertragungssystems (16) zu minimieren.

**6.** Steuereinheit (30) für einen elektrischen Aktuator (1), wobei der elektrische Aktuator (1) einen Elektromotor (10) mit einer Antriebswelle (12), eine in Translation durch den Elektromotor (10) entlang einer Translationsachse (X) angetriebene Last (14) und ein Übertragungssystem (16) umfasst, welches zwischen dem Elektromotor (10) und der Last (14) eingefügt ist, um die Rotation der Antriebswelle (12) in eine Translation der Last (14) umzuwandeln, wobei die Steuereinheit (30) dazu programmiert ist:

- den Elektromotor (10) dazu zu steuern, ein erstes Testdrehmoment (C1) auf die Antriebswelle (12) in einer ersten Rotationsrichtung auszüüben;
- den Elektromotor (10) dazu zu steuern, das erste Testdrehmoment (C1) zu entfernen oder das erste Testdrehmoment (C1) auf einen vorbestimmen Restwert zu reduzieren;
- von einem Positionssensor einen ersten Datenwert zu erhalten, welcher eine erste Winkelposition der Antriebswelle (12) repräsentiert;
- den Elektromotor (10) dazu zu steuern, ein zweites Testdrehmoment (C2) auf die Antriebswelle (12) in einer zweiten Rotationsrichtung auszüüben;
- den Elektromotor (10) dazu zu steuern, das zweite Testdrehmoment (C2) zu entfernen oder das zweite Testdrehmoment (C2) auf den vorbestimmten Restwert zu reduzieren;
- von dem Positionssensor einen zweiten Datenwert zu erhalten, welcher eine zweite Winkelposition der Antriebswelle (12) repräsentiert;
- die Differenz (D) zwischen dem ersten Datenwert und dem zweiten Datenwert oder zwischen einem ersten linearen Positionswert (P1) der Antriebswelle (12), welcher aus dem ersten Datenwert erhalten wird, und einem zweiten linearen Positionswert (P2) der Antriebswelle (12) zu messen, welcher aus dem zweiten Datenwert erhalten wird.

**7.** Steuereinheit (30) nach dem vorhergehenden Anspruch, wobei das zweite Testdrehmoment (C2) gleich in seinem Absolutwert zu dem ersten Testdrehmoment (C1) ist.

**8.** Steuereinheit (30) nach Anspruch 6 oder 7, wobei das erste und das zweite Testdrehmoment (C1, C2) dazu veranlasst werden, linear oder nach einer anderen Vorgabe abzunehmen, welche geeignet ist, das elastische Rückstellen des Übertragungssystems (16) zu minimieren.

**9.** Computerprogramm, welches an einer Steuereinheit (30) eines elektrischen Aktuators (1) ausführbar ist und Codeabschnitte umfasst, welche, wenn das Programm von einem Computer ausgeführt wird, den Computer dazu veranlassen, die Schritte des Verfahrens nach Anspruch 1 durchzuführen.

**10.** Computerprogramm nach Anspruch 9, wobei das zweite Testdrehmoment (C2) gleich in seinem Absolutwert zu dem ersten Testdrehmoment (C1) ist.

**11.** Computerprogramm nach Anspruch 9 oder 10, wobei das erste und das zweite Testdrehmoment (C1, C2) dazu veranlasst werden, linear oder nach einer anderen Vorgabe abzunehmen, welche geeignet ist, das elastische Rückstellen des Übertragungssystems (16) zu minimieren.

**12.** Elektrischer Aktuator (1), umfassend einen Drehmoment-steuerbaren Elektromotor (10) mit einer Antriebswelle (12), eine in Translation durch den Elektromotor (10) entlang einer Translationsachse (X) angetriebene Last (14), ein Übertragungssystem (16), welches zwischen dem Elektromotor (10) und der Last (14) eingefügt ist, um die Rotation der Antriebswelle (12) in eine Last-Translation umzuwandeln, einen Drehposition-Sensor, welcher für ein Detektieren der Winkelposition der Antriebswelle (12) geeignet ist, und eine Steuereinheit (30) für den Elektromotor (10) nach einem der Ansprüche 6-8 und betriebsmäßig mit dem Positionssensor verbunden.

**13.** Elektrischer Aktuator (1) nach dem vorhergehenden Anspruch, umfassend einen Zylinder, wobei die Last (14) eine Stange (18) ist, welche in dem Zylinder gleitbar ist, und wobei das Übertragungssystem (16) einen Kugelgewindetrieb (164) umfasst.

**14.** Elektrischer Aktuator (1) nach Anspruch 12 oder 13, ferner umfassend eine axiale Verriegelungsvorrichtung (40), welche für ein axiales Verriegeln der Last (14) in der Richtung der Translationsachse (X) aktivierbar ist.

**15.** Elektrischer Aktuator (1) nach Anspruch 14, wobei die axiale Verriegelungsvorrichtung (40) die Last (14) dazu frei lässt, um die Translationsachse (X) zu rotieren.

**Revendications**

1. Procédé de détection ou de mesure du jeu dans un actionneur électrique (1),

dans lequel ledit actionneur électrique (1) comprend un moteur électrique (10) comportant un arbre d'entraînement (12), une charge (14) étant entraînée en translation par le moteur électrique (10) le long d'un axe de translation (X), et un système de transmission (16) interposé entre le moteur électrique (10) et la charge (14) pour convertir la rotation de l'arbre d'entraînement (12) en une translation de la charge (14), comprenant les étapes de :

a) la commande du moteur électrique (10) pour appliquer un premier couple de test (C1) à l'arbre d'entraînement (12) dans une première direction de rotation ;
b) la commande du moteur électrique (10) pour interrompre le premier couple de test (C1) ou réduire le premier couple de test (C1) à une valeur résiduelle prédéfinie ;
c) le stockage d'une première donnée représentative d'une première position angulaire de l'arbre d'entraînement (12) adoptée lors de l'interruption du premier couple de test (C1) ou lorsque la valeur résiduelle de couple est atteinte ;
d) la commande du moteur électrique (10) pour appliquer un second couple de test (C2) à l'arbre d'entraînement (12) dans une seconde direction de rotation ;
e) la commande du moteur électrique (10) pour interrompre le second couple de test (C2) ou réduire le second couple de test (C2) à ladite valeur résiduelle prédéfinie ;
f) le stockage d'une seconde donnée représentative d'une seconde position angulaire de l'arbre d'entraînement (12) adoptée lorsque le second couple de test (C2) est interrompu ou lorsque la valeur résiduelle de couple est atteinte ;
g) la mesure de la différence (D) entre ladite première donnée et ladite seconde donnée ou entre une première valeur de position linéaire (P1) de l'arbre d'entraînement (12) obtenue à partir de la première donnée et une seconde valeur de position linéaire (P2) de l'arbre d'entraînement (12) obtenue à partir de la seconde donnée.

2. Procédé selon la revendication 1, comprenant, avant l'étape a), le verrouillage axial de la charge (14) dans la direction de l'axe de translation (X).

3. Procédé selon la revendication 2, dans lequel la charge axialement verrouillée (14) est laissée libre en rotation autour de l'axe de translation (X).

4. Procédé selon l'une quelconque des revendications 2 à 3, dans lequel le second couple de test (C2) est égal en valeur absolue au premier couple de test (C1).

5. Procédé selon la revendication 2, dans lequel, aux étapes b) et e), le couple de test (C1, C2) est amené à diminuer de manière linéaire ou selon une autre loi adaptée pour minimiser les rappels élastiques du système de transmission (16).

6. Unité de commande (30) pour un actionneur électrique (1), dans laquelle ledit actionneur électrique (1) comprend un moteur électrique (10) comportant un arbre d'entraînement (12), une charge (14) étant entraînée en translation par le moteur électrique (10) le long d'un axe de translation (X), et un système de transmission (16) interposé entre le moteur électrique (10) et la charge (14) pour convertir la rotation de l'arbre d'entraînement (12) en une translation de la charge (14), l'unité de commande (30) étant programmée pour :

- commander le moteur électrique (10) pour appliquer un premier couple de test (C1) à l'arbre d'entraînement (12) dans une première direction de rotation ;
- commander le moteur électrique (10) pour interrompre le premier couple de test (C1) ou réduire le premier couple de test (C1) à une valeur résiduelle prédéfinie ;
- recevoir, en provenance d'un capteur de position, une première donnée représentative d'une première position angulaire de l'arbre d'entraînement (12) ;
- commander le moteur électrique (10) pour appliquer un second couple de test (C2) à l'arbre d'entraînement (12) dans une seconde direction de rotation ;
- commander le moteur électrique (10) pour interrompre le second couple de test (C2) ou réduire le second couple de test (C2) à ladite valeur résiduelle prédéfinie ;

- recevoir, en provenance dudit capteur de position, une seconde donnée représentative d'une seconde position angulaire de l'arbre d'entraînement (12) ;
- mesurer la différence (D) entre ladite première donnée et ladite seconde donnée ou entre une première valeur de position linéaire (P1) de l'arbre d'entraînement (12) obtenue à partir de la première donnée et une seconde valeur de position linéaire (P2) de l'arbre d'entraînement (12) obtenue à partir de la seconde donnée.

7. Unité de commande (30) selon la revendication précédente, dans laquelle ledit second couple de test (C2) est égal en valeur absolue au premier couple de test (C1).

8. Unité de commande selon la revendication 6 ou 7, dans laquelle le premier et le second couple de test (C1, C2) sont amenés à diminuer linéairement ou selon une autre loi adaptée pour minimiser les rappels élastiques du système de transmission (16).

9. Programme informatique exécutable sur une unité de commande (30) d'un actionneur électrique (1) et comprenant des parties de code lesquelles, lorsque le programme est exécuté par un ordinateur, amènent l'ordinateur à effectuer les étapes du procédé selon la revendication 1.

10. Programme informatique selon la revendication 9, dans lequel ledit second couple de test (C2) est égal en valeur absolue au premier couple de test (C1).

11. Programme informatique selon la revendication 9 ou 10, dans lequel le premier et le second couple de test (C1, C2) sont amenés à diminuer linéairement ou selon une autre loi adaptée pour minimiser les rappels élastiques du système de transmission (16).

12. Actionneur électrique (1), comprenant un moteur électrique pouvant être à contrôle de couple (10) comportant un arbre d'entraînement (12), une charge (14) étant entraînée en translation par le moteur électrique (10) le long d'un axe de translation (X), un système de transmission (16) interposé entre le moteur électrique (10) et la charge (14) pour convertir la rotation de l'arbre d'entraînement (12) en une translation de la charge, un capteur de position angulaire adapté pour détecter la position angulaire de l'arbre d'entraînement (12) et une unité de commande (30) pour le moteur électrique (10) selon l'une quelconque des revendications 6 à 8 et fonctionnellement connectée au capteur de position.

13. Actionneur électrique (1) selon la revendication précédente, comprenant un vérin, dans lequel la charge (14) est une tige (18) apte à coulisser dans le vérin, et dans lequel le système de transmission (16) comprend une vis sphérique (164).

14. Actionneur électrique (1) selon la revendication 12 ou 13, comprenant en outre un dispositif de verrouillage axial (40) qui est actionnable pour verrouiller axialement la charge (14) dans la direction de l'axe de translation (X).

15. Actionneur électrique (1) selon la revendication 14, dans lequel le dispositif de verrouillage axial (40) laisse la charge (14) libre en rotation autour de l'axe de translation (X).

FIG.1

FIG.2

EP 3 734 117 B1

FIG.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010134884 A1